# EUROPEAN PATENT APPLICATION

(11) **EP 0 588 612 A1**
(43) Date of publication of application: **23.03.1994**
(21) Application number: 93307266.2
(22) Date of filing: 15.09.1993
(51) Int. Cl.: G01K 11/12

(54) **Discriminator for separating back scattered raman light**

(30) Priority: 16.09.1992 JP 272366/92
(71) Applicant: ANDO ELECTRIC CO., LTD., Tokyo 144 (JP); SUMITOMO ELECTRIC INDUSTRIES, LIMITED, Osaka 541 (JP)
(72) Inventor: Ohki, Kazuhiro, c/o ANDO ELECTRIC CO. LTD., Ota-ku, Tokyo (JP); Wakami, Toshinori, c/o YOKOHAMA WORKS, Sakae-ku, Yokohama-shi, Kanagawa-ken (JP)
(74) Representative: Rackham, Stephen Neil

(57) **Abstract**

A discriminator for separating back scattered Raman light to separate the Stokes light and the anti-Stokes light from back scattered Rayleigh light includes a band filter (3). The discriminator also includes a pulsed source (1) of light of wavelength λa, a first lens (2A) collimating the light pulses from the source (1), a second lens (2B) condensing the beam of collimated light pulses to an optical fibre (5) and the reflective band filter (5) is provided in the optical path between the lenses (2A, 2B) to be oblique to the common optical axis of the lenses (2A, 2B). A wavelength separator (4) receives light reflected from the band filter (3). The band filter (3) allows a light substantially of wavelength λa to pass from the source (1) to the optical fibre (5) and cuts off light of wavelength λa+Δλb and λa-Δλb. The band filter thus allows back scattered Rayleigh light of wavelength substantially λa to pass from the optical fibre (5) to the source (1). However, the reflecting band filter (3) reflects all of the back scattered Raman light comprising the Stokes light of wavelength λa+Δλb, and the anti-Stokes light of wavelength λa-Δλb to the wavelength separator (4). This discriminator is useful in a thermometer for detecting the temperature of the optical fibre (5).

## Description

The present invention relates to a discriminator for separating back scattered Raman light which may be used in a temperature monitoring of an optical fibre.

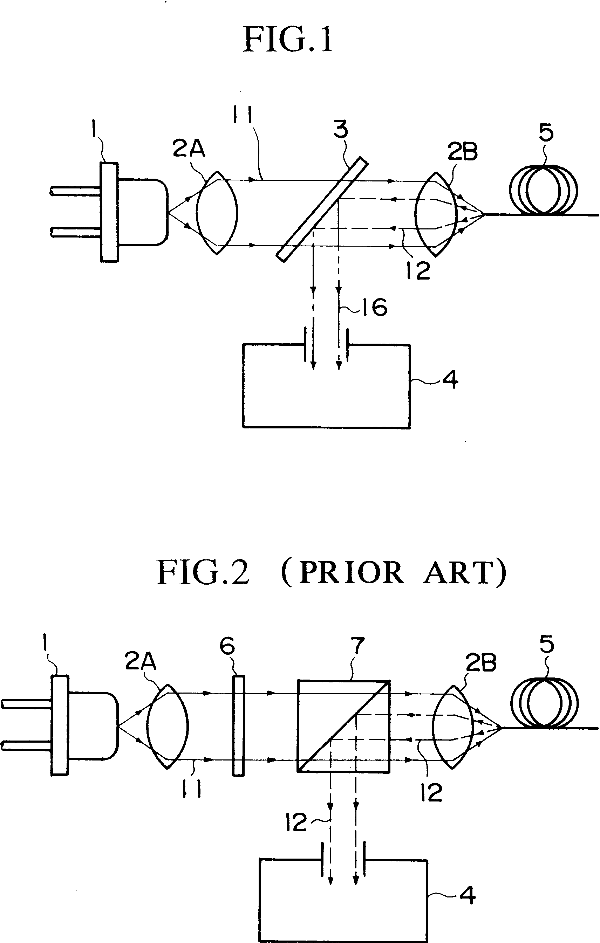

FIG. 2 shows the arrangement of a prior art Raman scattering light discriminator. A source of pulsed light comprises, e.g. a semiconductor laser diode 1. Lenses are indicated at 2A and 2B. A spectroscope or wavelength separator is indication at 4. An optical fibre is indicated at 5. A band filter is indicated at 6. A polarizing beam splitter is indicated at 7.

The source 1 of pulsed light emits a light of a wavelength of λa. The lens 2A collimates this light to produce a collimated beam of light 11. The band filter 6 limits the band of wavelengths of the collimated beam 11 so as to pass a light of a wavelength approximate to the wavelength λa and cut off a light of a wavelength of λa+Δλb and a light of a wavelength of λa-Δλc. The polarizing beam splitter 7 receives the light passing through the band filter 6. The lens 2B condenses the collimated beam passing the polarizing beam splitter 7 to the optical fiber 5. The lens 2B collimates a back scattering light 12 produced within and emitted from the optical fiber 5 and transmits it to the polarizing beam splitter 7. The polarizing beam splitter 7 reflects 50% of the back scattering light 12, which has no polarizability, to the wavelength separator 4. The wavelength separator 4 separates the back scattering light 12 into a Rayleigh scattering light 13 of a wavelength of λa, a stokes line or light 14 of a wavelength of λa+Δλb and an antistokes line or light 15 of a wavelength of λa-Δλc and extracts only the stokes light 14 and the antistokes light 15 necessary to determine the temperature of the optical fiber 5.

In the arrangement of FIG.2, the polarizing beam splitter 7 extracts the back scattering light 12, so that this arrangement requires the provision of the band filter 6 extracting the beam of light transmitted to the optical fiber 5. The polarizing beam splitter 7 gives a loss of 50% in reflecting the back scattering light 12 to reduce the determination performance of the discriminator. In addition, the polarizing beam splitter 7 passes the bands of all the wavelengths of the back scattering light 12, so that the wavelength separator 4 is required to eliminate the Rayleigh scattering light 13 of the wavelength of λa unnecessary to the temperature determination of the optical fiber 5 from the back scattering light 12.

According to this invention a discriminator for Raman scattered light back scattered light from am optical fibre, comprising:
a pulsed source of light of a wavelength of λa;
a first lens collimating light pulses from said pulsed source;
a second lens condensing the collimated light pulses into an optical fibre;
a wavelength separator receiving light back scattered from said optical fibre;
is characterised in that a reflective band filter is provided in the optical path between said lenses and oblique to the common optical axis of said lenses;
said reflective band filter allowing light of wavelength substantially λa to pass through to the optical fibre and cutting off lights of wavelength (λa+Δλb) and (λa-Δλb), said band filter also allowing through back scattered Rayleigh light of wavelength substantially λa to pass from the optical fibre to said pulsed source of light and reflecting substantially all of the back scattered Raman light comprising a Stokes light of wave-length λa+Δλb and an anti-Stokes light of wavelength λa+Δλb to said wavelength separator.

The discriminator in accordance with this invention extracts the Stokes light and the anti-Stokes light out of the back scattered light.

A particular embodiment of a discriminator in accordance with this invention will now be described and contrasted with the prior art already discussed with reference to the accompanying drawings, in which:-
FIG.1 is a diagram of the arrangement of a Raman scattering light discriminator according to an embodiment of the present invention;
FIG.2 is a diagram of the arrangement of a prior art Raman scattering light discriminator;
FIG.3 is a graph of level characteristics of wavelength components of a light emitted from a source of pulsed light;
FIG.4 is a graph of the band characteristic of a reflective band filter;
FIG.5 is a graph of level characteristics of wavelength components of a back scattering light from an optical fiber; and
FIG.6 is a graph of level characteristics of wavelength components of a reflected light from the reflective band filter.

A preferred embodiment of the present invention will be described with reference to the drawings hereinafter. As shown in FIG.1, a Raman scattering light discriminator according to an embodiment of the present invention comprises a source 1 of pulsed light of a wavelength of λa, a first lens 2A collimating a pulsed light from the source 1 of pulsed light, a second lens 2B condensing the beam of collimated pulsed light to an optical fiber 5 the temperature of which is to be determined, a reflective band filter 3 provided intermediate a optical path between the first and second lenses 2A and 2B so as to be oblique to the common optical axis of lenses 2A and 2B, and a wavelength separator 4 receiving a reflected light from the band filter 3.

The reflective band filter 3 replaces an assembly of the band filter 6 and the polarizing beam splitter 7 of FIG.2. The band filter 3 is disposed between the lenses 2A and 2B so as to be oblique to the common optical axis of the lenses 2A and 2B.

The lens 2B collimates a back scattering light 12 produced within the optical fiber 5 and transmits the collimated beam to the band filter 3. The band filter 3 allows a Rayleigh scattering light 13 of a wavelength approximate to λa pass to the source 1 of pulsed light. On the other hand, the band filter 3 reflects to the wavelength separator 4 the total Raman scattering light 16 comprising a stokes light 14 of a wavelength λa+Δλb and a antistokes light 15 of a wavelength λa+Δλc of the back scattering light 12.

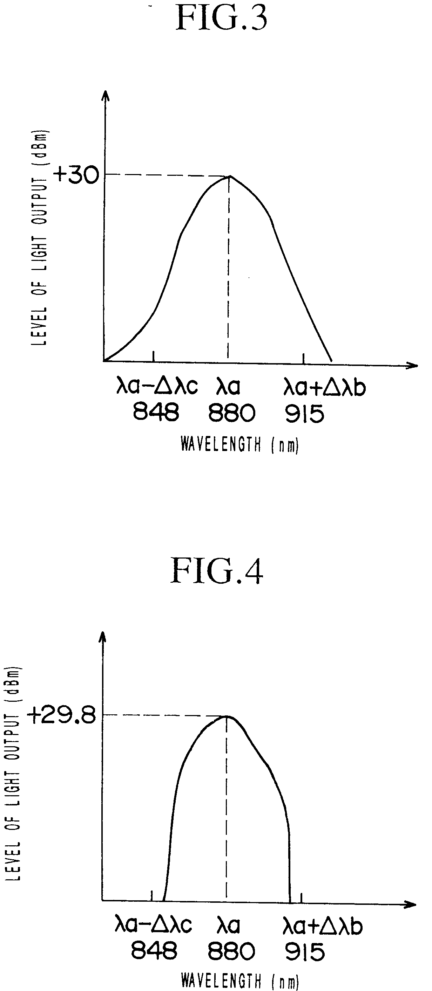

FIG.3 is a graph of level characteristics of wavelength components of the light from the source 1 of pulsed light. In this case, the wavelength λa is 880 nm and the peak level of the light from the source 1 of pulsed light is 30 dBm.

FIG.4 is the band characteristic of the band filter 3. When the band filter 3 receives the light indicated in FIG.3, the band filter 3 allows the light of the wavelength approximate to λa to pass and cuts off the lights of the wavelengths λa+Δλb and λa-Δλc. As shown in FIGS.3 and 4, the wavelength λa+Δλb is 915 nm and the wavelength λa-Δλc is 848 nm.

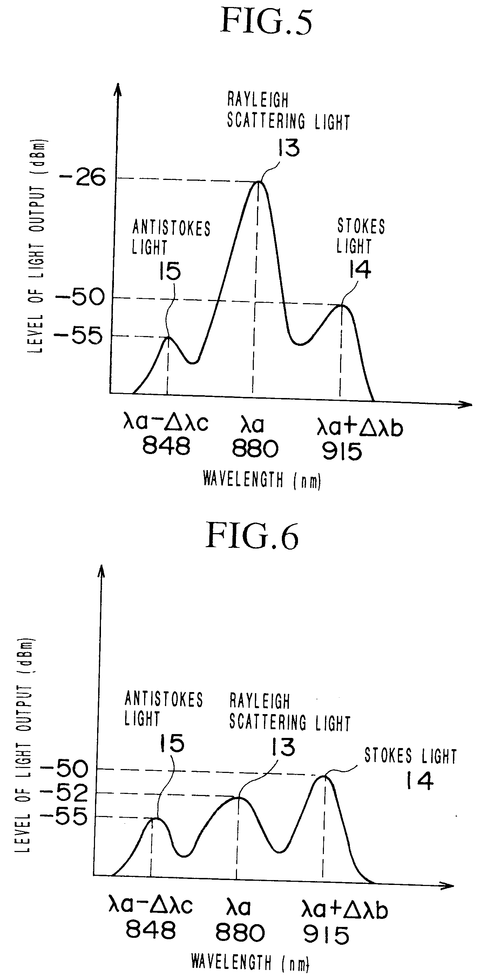

FIG.5 is a graph of level characteristics of wavelength components of the back scattering light 12. The level of a Rayleigh scattering light 13 is -26 dBm, the level of a stokes light 14 is -50 dBm and the level of an antistokes light 15 is -55 dBm.

FIG.6 is a graph of level characteristics of wavelength components of the reflected light from the band filter 3 when the band filter 3 reflects the back scattering light 12 indicated in FIG.5. As shown in FIG.6, the band filter 3 allows most of the Rayleigh scattering light 13 pass to the source 1 of pulsed light and reflects the residue of the Rayleigh scattering light 13 to the wavelength separator 4 so that the level of the residue of the Rayleigh scattering light 13 is -52 dBm.

Thus, the wavelength separator 4 easily separates the stokes light 14 and the antistokes light 15 from the residue of the Rayleigh scattering light 13.

## Claims

1. A discriminator for Raman scattered light back scattered light from am optical fibre, comprising:
a pulsed source (1) of light of a wavelength of λa;
a first lens (2A) collimating light pulses from said pulsed source (1);
a second lens (2B) condensing the collimated light pulses into an optical fibre (5);
a wavelength separator (4) receiving light back scattered from said optical fibre (5);
characterised in that a reflective band filter (3) is provided in the optical path between said lenses (2A, 2B) and oblique to the common optical axis of said lenses (2A, 2B);
said reflective band filter (3) allowing light of wavelength substantially λa to pass through to the optical fibre (5) and cutting off lights of wavelength (λa+Δλb) and (λa-Δλb), said band filter (3) also allowing through back scattered Rayleigh light of wavelength substantially λa to pass from the optical fibre (5) to said pulsed source (1) of light and reflecting substantially all of the back scattered Raman light comprising a Stokes light of wavelength λa+Δλb and an anti-Stokes light of wavelength λa-Δλb to said wavelength separator (4).

2. A discriminator according to claim 1, which forms part of a thermometer for determining the temperature of the optical fibre (5) by monitoring the back scattered Stokes and anti-Stokes light.
